# FASCICULE DE BREVET EUROPEEN

(11) **EP 0 952 774 B1**
(45) Date de publication et mention de la délivrance du brevet: **30.10.2002**
(21) Numéro de dépôt: 97945917.9
(22) Date de dépôt: 13.11.1997
(51) Int. Cl.: A22C 9/00, A23B 4/00

(54) **PROCEDE DE TRAITEMENT THERMIQUE DE VIANDES SAUMUREES, TELLES QUE DES JAMBONS**
VERFAHREN ZUR THERMISCHEN BEHANDLUNG VON GEPÖKELTEM FLEISCH WIE SCHINKEN
METHOD FOR TREATING PICKLED MEAT SLICES, SUCH AS HAM SLICES

(30) Priorité: 13.11.1996 FR 9614045
(43) Date de publication de la demande: 03.11.1999
(73) Titulaire: KAUFLER S.A., F-22600 Loudeac (FR)
(72) Inventeur: CHAMPALAUNE, Jean-Claude, F-35290 Saint Meen Le Grand (FR); CORVELER, Yvon, F-56300 Pontivy (FR); LE MESTRE, Gilles, F-56850 Caudan (FR)
(74) Mandataire: Le Faou, Daniel
(86) Numéro de dépôt international: FR9702038
(87) Numéro de publication internationale: WO98020745

(56) Documents cités:
- EP-A- 0 106 078
- DE-A- 2 031 822
- DE-A- 3 811 754
- FR-A- 2 745 984
- GB-A- 862 273

## Description

La présente invention concerne le traitement thermique de viandes, telles que des jambons, et plus particulièrement un traitement de cuisson des viandes incluant une étape préalable de maturation et une étape finale de refroidissement.

Elle concerne plus précisément un traitement de ce genre appliqué à des viandes préalablement saumurées et enfermées sous vide dans des enveloppes étanches, telles que des films en matière plastique.

Usuellement les viandes transformées en salaison, et notamment les jambons, reçoivent une certaine quantité de saumure dont le poids peut atteindre de 10 à 70 % du poids des viandes. Cette opération se fait au moyen d'une machine spécialement adaptée, telle qu'un injecteur à aiguilles multiples notamment.

Ensuite, le plus souvent, elles sont travaillées mécaniquement au moyen de machines du type attendrisseur, sabreur ou steacker. Cette opération effectuée en continu a pour but d'augmenter les surfaces d'échange afin de favoriser la distribution de saumure et de permettre une meilleure solubilisation de certaines protéines de la viande qui auront pour effet de favoriser le recollement des muscles en cours de cuisson et à l'issue de celle-ci. Il s'en suit une opération de barattage, encore appelée massage ou malaxage, généralement sous vide, dans une machine appropriée. Cette opération dure en moyenne dix à vingt heures. Elle est nécessaire pour uniformiser la distribution de saumure, achever l'extraction de protéines tel qu'expliqué ci-dessus, et globalement assurer la maturation du produit nécessaire à l'apparition de la saveur et de la couleur spécifique des procédés de salaison.

Cette opération de barattage a pour inconvénient de rompre la continuité du processus car elle s'effectue sur des unités de, par exemple, une à six tonnes dans une machine appropriée qu'il faut charger, puis décharger à l'issue de l'opération. Elle nécessite donc, outre les machines de barattage, des manutentions supplémentaires, des appareils de manutention et des opérations de lavage des machines après opération. De plus, la texture des produits ainsi obtenue est relativement caoutchouteuse.

La présente invention a pour but de remédier à ces inconvénients en substituant à cette opération de barattage une opération de maturation, les produits ayant été au préalable emballés sous vide, de sorte qu'ils subissent un certain serrage de la part de l'enveloppe dans laquelle ils sont contenus, puis placés dans des moules.

Pour cela l'invention prévoit de faite subir aux viandes, avant leur cuisson, une opération de vibration à basse fréquence.

Il résulte en effet d'essais menés par la demanderesse que ce phénomène vibratoire, combiné à une action de maintien en compression (serrage) des viandes, alors qu'elles se trouvent sous vide, accélère considérablement la distribution de saumure et assure une maturation efficace des produits de salaisons, incluant notamment l'extraction de protéines de collage (limon), ce qui permet en pratique de supprimer - ou tout du moins de limiter - la durée du traitement de barattage.

Ce phénomène est encore amplifié si les viandes sont en plus soumises, durant le traitement vibratoire, à une compression mécanique selon une direction sensiblement verticale.

Le procédé de traitement thermique de viandes saumurées, et notamment de jambons, qui fait l'objet de l'invention, est remarquable en ce que :
a) les viandes ayant été préalablement saumurées, on les enferme individuellement, sous vide, dans des enveloppes étanches qui assurent un certain serrage des viandes ;
b) on les place dans des moules multiples empilables ;
c) on forme une pile de moules ;
d) on dépose cette pile sur un support susceptible de vibrer ;
e) on soumet la pile à un mouvement vibratoire à basse fréquence durant quelques heures ;
f) on procède successivement à la cuisson et au refroidissement des viandes, en les portant successivement à haute et à basse température ;
g) on défait la pile, et on retire des moules les viandes cuites et refroidies.

Selon un mode de mise en oeuvre préférentiel du procédé, au sein de la pile, les viandes sont soumises, au cours du traitement vibratoire de l'étape (e), à une compression mécanique s'exerçant du haut vers le bas.

De préférence, la durée de l'étape (e) du mouvement vibratoire a une durée comprise entre cinq et vingt heures et est réalisée à une température comprise entre 2 et 10° C.

Le procédé se prête particulièrement à une production de moyenne ou de grande série dans l'industrie de la salaison, car elle permet de travailler en continu sur de grandes quantités de produits, sans perte de temps ni manutention entre les différentes étapes.

Pour cela, de manière particulièrement avantageuse, on ne déplace pas la pile de moules entre les étapes (e) et (f) ci-dessus, ni du reste entre les étapes de cuisson et de refroidissement.

Ainsi, si la cuisson se fait à l'intérieur d'une cellule de cuisson, l'opération de mise en vibration de la pile peut se faire à l'intérieur même de cette cellule, avant la cuisson.

De préférence, le support vibrant recevant la pile de moules comporte deux branches parallèles autorisant le passage des fourches d'un appareil de manutention, et leur engagement sous la pile.

Il est possible d'appliquer ce traitement à plusieurs piles de moules simultanément.

D'autres caractéristiques et avantages de l'invention apparaîtront de la description et des dessins annexés qui en représentent, à simple titre d'exemples non limitatifs, des modes de mise en oeuvre préférés.

Sur ces dessins :
- la figure 1 est une vue de côté d'une pile de moules placés sur un support vibrant, en vue de la mise en oeuvre du procédé selon l'invention ;
- la figure 2 est une vue de côté de la figure 1, coupée par le plan brisé **BB ;**
- la figure 3 est une vue de dessus schématique de la pile de la figure 1 ;
- la figure 4 est une vue de dessus schématique d'une cellule de cuisson - ou tunnel - recevant plusieurs piles de moules ;
- la figure 5 est une vue schématique, de face, de la cellule de la figure 4, coupée par le plan **CC** ;
- la figure 6 est un détail correspondant au plan de coupe **EE** de la figure 4.

Sur les figures on a désigné par la référence 1 un ensemble de moules multiples empilés, qui contiennent chacun des blocs de viande préalablement saumurée, tels que des jambons, qui sont enfermés sous vide dans des enveloppes étanches, en particulier sous forme de film en matière plastique. Ces enveloppes ont tendance à se rétracter autour des viandes, assurant sur celles-ci un effort de serrage permament.

De tels moules, qui comportent plusieurs goulottes parallèles, éventuellement compartimentées, sont bien connus dans l'industrie de la salaison. Les viandes emballées étant confinées dans les goulottes, elles y reçoivent - en plus de l'action de l'enveloppe - une certaine compression due aux parois des goulottes et, éventuellement, des cloisons séparatrices prévues dans les goulottes.

Des moules de ce genre sont décrits par exemple dans les documents EP-A-0 292 417, EP-A-0 625 325, FR-A 2 599 341, FR-A 2 672 270, FR-B 2 729 544 et FR-A 2 745 984.

Plus particulièrement, les moules multiples mis en oeuvre, sont du type comprenant, disposée sous chaque goulotte, une plaque presseuse faisant office de couvercle pour le moule sous-jacent.

Ainsi, au sein d'une pile, l'ensemble des viandes d'une couche est comprimé par effet de serrage dû à l'action du couvercle ou des couvercles du moule multiple qui se trouve au dessus de lui et au poids des moules pleins qui surplombent ladite couche. Cette compression mécanique s'exerce sensiblement suivant une direction verticale, du haut vers le bas.

Dans certains types de moule, tel que celui qui fait l'objet du FR-B 2 729 544 notamment, il est prévu un montage élastique du couvercle, si bien que la pression de serrage des viandes est contrôlée.

L'invention peut également s'appliquer à des piles formées, dans chaque couche, d'un ensemble de goulottes et d'un ensemble de couvercles indépendants, comme prévu par exemple dans le document FR-A 2 690 899.

Quel que soit le type de moule multiple utilisé, selon un mode de mise en oeuvre préférentiel du procédé, il est intéressant que l'ensemble des viandes contenues au sein de la pile soit maintenu comprimé mécaniquement au cours du traitement.

Pour cela, le moule supérieur de la pile peut ne pas contenir de viande, et par conséquent jouer seulement le rôle de couvercle ; il est également possible de doter ce moule supérieur d'un système de serrage spécifique.

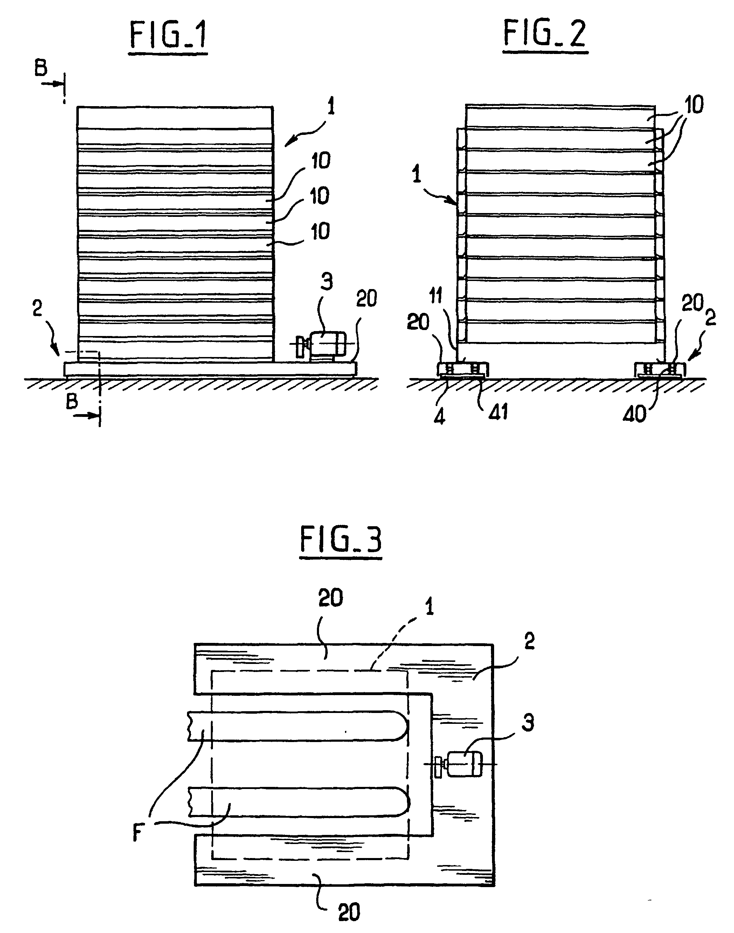

La pile 1 de moules 10 est placée sur un support horizontal 2 ; dans l'exemple illustré sur les figures 1 à 3, ce support a, vu de dessus, la forme générale d'un "U" dont les deux branches latérales parallèles sont référencées 20.

Dans l'exemple illustré les moules comportent, à l'extrémité de leurs goulottes, des plaques de fermeture 11 en forme de flasques, tels que décrits dans les documents FR-A 2 672 270 ou FR-B 2 729 544 précités, auxquels on pourra se reporter au besoin.

Ces flaques sont des plaques de tôle à pliage multiple comportant à leur base une partie horizontale qui sert à l'empilage des moules les uns sur les autres et à l'appui au sol du moule inférieur de la pile.

La pile 1 repose donc par ses flasques latéraux 11 sur les branches 20 du support 2.

Comme on le voit sur la figure 2, les branches 20 sont des profilés de section en forme de "U" renversé dont l'ouverture est dirigée vers le bas et qui repose par l'intermédiaire de ressort 40 sur une plaque d'appui 4.

De préférence, cette dernière repose au sol par l'intermédiaire d'un matériau d'amortissement 41.

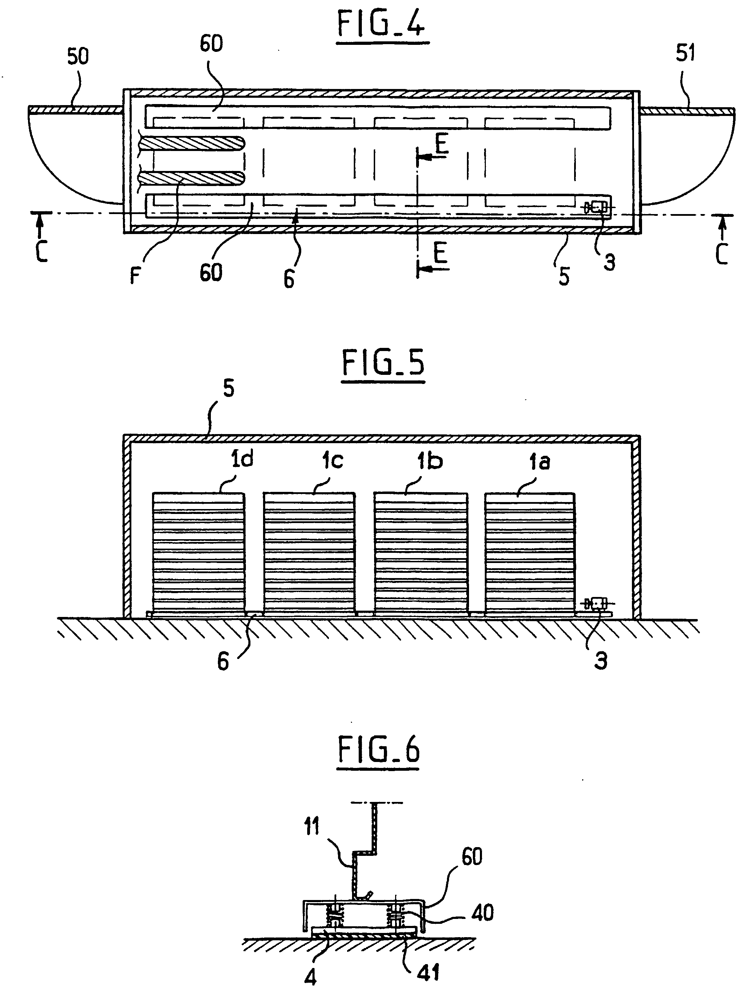

Cet arrangement est particulièrement visible sur la figure 6, qui se rapporte au mode de réalisation des figures 4 et 5, mais est identique pour ce qui concerne cette disposition, la branche support y étant simplement référencée 60 au lieu de 20.

Sur le support 2 est monté par ailleurs un vibreur 3 ; il s'agit par exemple tout simplement, d'un moteur asynchrone portant un balourd sur son arbre de sortie, de telle sorte que la rotation du moteur engendre des vibrations et des oscillations périodiques du support 2, ceci à basse fréquence.

La présence du matériau amortisseur 41 empêche ou limite la propagation des vibrations au sol.

En revanche, toute la pile 1 est soumise aux vibrations.

Comme le montre la figure 3, la forme en "U" du support 2 autorise le passage des fourches **F** d'un appareil de manutention, pour permettre la mise en place de la pile 1 sur son support vibratoire avant l'opération, et son enlèvement après l'opération.

Des butées, ou autres systèmes de blocage appropriés, peuvent être prévus sur le support 2 pour empêcher le déplacement de la pile 1 au cours de l'opération.

De préférence, et à titre indicatif, le vibreur 3 est choisi de manière à imprimer à la pile des vibrations à une fréquence comprise entre 2 et 200 Hertz, par exemple de l'ordre 50 à 100 Hz, et à une amplitude comprise entre 1 et 10 mm, par exemple de l'ordre de 4 à 6 mm.

La durée du traitement vibratoire est de quelques heures, par exemple de l'ordre d'une dizaine d'heures.

Une fois terminé le traitement vibratoire, on procède successivement à la cuisson et au refroidissement des viandes contenues dans la pile, et dont le traitement vibratoire a provoqué la maturation.

A titre indicatif, les traitements de cuisson et de refroidissement durent chacun une dizaine d'heures.

Ces traitements thermiques se font avantageusement sans déplacement préalable de la pile.

Ceci est possible notamment si le support 2 et la pile se trouve à l'intérieur d'une enceinte de cuisson et de refroidissement, cette enceinte pouvant être de type connu.

Ceci est également possible dans l'hypothèse ou les moules multiples utilisés sont du type décrit dans le FR-A 2 745 984, ce type de moule ayant une structure telle que chaque goulotte est fixée à son élément de couvercle en délimitant un conduit étanche apte à recevoir un fluide caloporteur pour le traitement, par échange thermique, des viandes contenues dans les goulottes. autoriser la vibration de l'ensemble sans qu'on ait à démonter lesdites tubulures en vue du traitement vibratoire.

Pendant cette opération de vibrations, il convient que les viandes soient maintenues à une température relativement basse, comprise environ + de 2° C et + de 10° C, de manière à éviter les fermentations qui dégraderaient la qualité bactériologique du produit.

Cette température est par exemple de + 6° C.

La basse température peut être obtenue soit par réfrigération du local ou se pratique l'opération, soit - dans le cas de moules conformes au FR-A 2 745 984 - par apport et circulation d'eau froide à l'intérieur même des moules.

Comme cela a été déjà dit, ce système de moulage se prête à la mise en oeuvre successive d'une cuisson et d'un refroidissement rapide du produit dans la même enceinte, et, dans le cas de moules multiples traditionnels, il est donc intéressant d'envisager que la maturation vibratoire s'opère dans l'enceinte même ou se dérouleront la cuisson et le refroidissement, afin d'éviter un transport des piles d'un lieu à un autre et afin de pouvoir piloter les opérations successives de maturation, cuisson et refroidissement rapide de façon totalement automatique.

Les figures 4 et 5 représentent un ensemble de piles, en l'occurrence quatre piles référencées **1a, 1b, 1c, 1d,** placées à l'intérieur d'une enceinte isolante 5. Cette enceinte consiste, de manière connue, en un tunnel comprenant des portes d'entrée et de sortie, représentées seulement sur la figure 4, et référencées 50 et 51, respectivement.

Les piles 1 se trouvent disposées les unes derrière les autres, et sont posées sur un support 6 composé de deux longerons parallèle 60. Ces derniers ont une structure similaire aux branches 20 du mode de réalisation précédent, et leur écartement mutuel autorise le passage d'un élévateur à fourche **F** (voir figure 4).

Les moules inférieurs de chaque pile reposent par leurs flasques 11 sur les longerons 60 ; comme l'illustre la figure 6, chacun des longerons 60 est monté élastiquement sur une plaque de montage 4 par l'intermédiaire de ressorts hélicoïdaux d'axe vertical 40. La plaque 4 est elle-même supportée indirectement au sol, par l'intermédiaire d'un moyen amortisseur 41 tel qu'une couche de matériau d'amortissement.

Sur l'un au moins des deux longerons 60 est monté un vibreur 3 similaire à celui du mode de réalisation précédent.

Les piles **1a, 1b, 1c** et **1d** introduits par la porte 50 à la suite les unes des autres à l'intérieur du tunnel 5, et placés sur les longerons 60.

La mise en route du vibreur permet de faire vibrer simultanément l'ensemble des piles contenues dans l'enceinte 6. Ce traitement vibratoire dure quelques heures.

Après cette opération, la cuisson et le refroidissement subséquent des viandes sont réalisés à l'intérieur de l'enceinte 5, sans que les piles 1 ne soient déplacées.

Les piles contenant des produits cuits et refroidis sont retirées du tunnel de cuisson par la porte de sortie 51 à l'issue du traitement, et un nouvel ensemble à traiter peut alors être introduit immédiatement dans le tunnel par la porte d'entrée 50.

Les moules ayant subi le traitement conforme à l'invention sont ensuite dépilées, et les viandes cuites sont extraites des moules.

Elles sont alors en état d'être commercialisées.

A titre indicatif, chaque pile peut être constituée de dix moules multiples contenant chacun des blocs ou des barres de jambon pouvant atteindre au total (dans chaque couche) jusqu'à 100 kilogrammes.

La direction du mouvement vibratoire n'a pas réellement d'importance ; de préférence cependant, il est multidirectionnel.

Il va de soi que le montage élastique du support des piles peut être différent de celui qui a été représenté sur les figures ; ainsi on pourra utiliser des ressorts à lame ou des tampons en caoutchouc synthétique à la place de ressorts hélicoïdaux ; pour générer le mouvement vibratoire on pourrait utiliser un vibreur sous forme d'oscillateur électromagnétique.

Le procédé objet de l'invention permet en principe de supprimer l'opération de barattage conventionnel ; toutefois, on ne sortirait pas du cadre de l'invention en procédant à un barattage préalable, de durée limitée, par exemple d'une heure. Dans ce cas ce barattage pourra s'effectuer de manière relativement énergique, l'élévation de température du produit engendrée par l'opération n'étant pas réellement préjudiciable puisqu'elle est immédiatement contrecarrée à l'issue du barattage par la réfrigération rapide des produits, notamment dans le cas particulier des moules possédant un système interne de circulation de fluide caloporteur.

## Revendications

1. Procédé de traitement thermique de viandes saumurées, telles que des jambons, selon lequel :
a) les viandes ayant été préalablement saumurées, on les enferme individuellement, sous vide, dans des enveloppes étanches qui assurent un certain serrage des viandes ;
b) on les place dans des moules multiples empilables (10) ;
c) on forme une pile de moules (1) ;
d) on dépose cette pile sur un support (2 ; 6) susceptible de vibrer ;
e) on soumet la pile à un mouvement vibratoire à basse fréquence durant quelques heures ;
f) on procède successivement à la cuisson et au refroidissement des viandes, en les portant successivement à haute et à basse température ;
g) on défait la pile, et on retire des moules les viandes cuites et refroidies.

2. Procédé selon la revendication 1, **caractérisé par le fait qu'**au sein de la pile (1), les viandes sont soumises, au cours de l'étape (e), à une compression mécanique s'exerçant du haut vers le bas.

3. Procédé selon la revendication 1 ou 2, **caractérisé par le fait que** la durée de l'étape (e) est comprise entre cinq et vingt heures.

4. Procédé selon l'une des revendications 1 à 3, **caractérisé par le fait que** l'étape (e) est réalisée à une température comprise entre 2 et 10° C.

5. Procédé selon l'une des revendications 1 à 4, **caractérisé par le fait qu'**entre les étapes (e) et (f) on ne déplace pas la pile (1).

6. Procédé selon l'une des revendications 1 à 5, **caractérisé par le fait qu'**on utilise un support vibrant (2 ; 6) comportant deux branches parallèles (20 ; 60) autorisant le passage des fourches (F) d'un appareil de manutention

7. Procédé selon l'une des revendications précédentes, **caractérisé par le fait qu'**on l'applique simultanément à plusieurs piles de moules (1a, 1b 1c, 1d).

## Patentansprüche

1. Verfahren zur thermischen Behandlung von gepökeltem Fleisch, wie Schinken, gemäß welchem:
a) die Pleischstücke, welche zuvor gepökelt worden sind, einzeln unter Vakuum in dichten Behältnissen verschlossen werden, welche ein gewisses Pressen der Fleischstücke sicherstellen;
b) sie in aufstapelbaren Mehrfachpressformen (10) angeordnet werden:
c) ein Stapel aus Pressformen (1) gebildet wird;
d) dieser Stapel auf einem Träger (2; 6) angeordnet wird, der vibrieren kann;
e) der Stapel einer Vibrationsbewegung mit niedriger Frequenz während einiger Stunden ausgesetzt wird;
f) hintereinander ein Kochen und Abkühlen der Fleischstücke durchgeführt wird, indem sie nacheinander auf eine hohe und eine niedrige Temperatur gebracht werden;
g) der Stapel auseinander genommen wird und die gekochten und abgekühlten Fleischstücke aus den Pressformen herausgenommen werden.

2. Verfahren gemäß Anspruch 1, **dadurch gekennzeichnet, dass** die Fleischstücke innerhalb des Stapels (1) während des Schrittes (e) einem mechanischen Zusammendrücken ausgesetzt werden, das sich von oben nach unten vollzieht.

3. Verfahren gemäß Anspruch 1 oder 2, **dadurch gekennzeichnet, dass** die Dauer des Schrittes (e) zwischen fünf und zwanzig Stunden liegt.

4. Verfahren gemäß einem der Ansprüche 1 bis 3, **dadurch gekennzeichnet, dass** der Schritt (e) bei einer Temperatur zwischen 2 und 10°C durchgeführt wird.

5. Verfahren gemäß einem der Ansprüche 1 bis 4, **dadurch gekennzeichnet, dass** der Stapel (1) zwischen den Schritten (e) und (f) nicht verschoben wird.

6. Verfahren gemäß einem der Ansprüche 1 bis 5, **dadurch gekennzeichnet, dass** ein vibrierender Träger (2; 6) eingesetzt wird, der zwei parallele Schenkel (20; 60) aufweist, welche den Durchgang der Gabeln (F) eines Gabelstaplers zulassen.

7. Verfahren gemäß einem der vorherigen Ansprüche, **dadurch gekennzeichnet, dass** es gleichzeitig auf mehrere Pressformstapel (1a, 1b, 1c, 1d) angewandt wird.

## Claims

1. A method of heat treating brined pieces of meat, such as hams, in which:
a) after the pieces of meat have previously been brined, they are individually vacuum packed in leaktight packages that apply a certain amount of pressure to the pieces of meat;
b) they are placed in multiple molds (10) that are stackable;
c) a stack of molds (1) is built up;
d) the stack is placed on a support (2; 6) that is capable of vibrating;
e) the stack is subjected to low frequency vibratory motion for several hours;
f) the pieces of meat are subjected in succession to cooking and to cooling, being taken in succession to high temperature and to low temperature; and
g) the stack is taken apart and the cooked and cooled pieces of meat are withdrawn from the molds.

2. A method according to claim 1, **characterized by** the fact that within the stack (1), the pieces of meat are subjected during step e) to mechanical compression acting downwards.

3. A method according to claim 1 or claim 2, **characterized by** the fact that the duration of step e) lies in the range 5 hours to 20 hours.

4. A method according to any one of claims 1 to 3, **characterized by** the fact that step e) is implemented at a temperature lying in the range 2°C to 10°C.

5. A method according to any one of claims 1 to 4, **characterized by** the fact that between steps e) and f) the stack (1) is not moved.

6. A method according to any one of claims 1 to 5, **characterized by** the fact that a vibrating support (2; 6) is used comprising two parallel branches (20; 60) for passing the forks (F) of goods-handling equipment.

7. A method according to any preceding claim, **characterized by** the fact that it is applied simultaneously to a plurality of stacks of molds (1a, 1b, 1c, 1d).
